Europäisches Patentamt

European Patent Office

Office européen des brevets

(11) Veröffentlichungsnummer: **0 339 392**
**A1**

## (12) EUROPÄISCHE PATENTANMELDUNG

(21) Anmeldenummer: 89106691.2

(22) Anmeldetag: 14.04.89

(51) Int. Cl.4: **C08K 5/42 , C08L 81/02 , C08G 75/02**

(30) Priorität: 27.04.88 DE 3814165

(43) Veröffentlichungstag der Anmeldung:
02.11.89 Patentblatt 89/44

(84) Benannte Vertragsstaaten:
**BE DE FR GB IT**

(71) Anmelder: **BAYER AG**

**D-5090 Leverkusen 1 Bayerwerk(DE)**

(72) Erfinder: **Köhler, Burkhard, Dr.**
**Virneburgstrasse 9**
**D-4150 Krefeld 11(DE)**
Erfinder: **Meyer, Rolf-Volker, Dr.**
**Buchheimer Strasse 23**
**D-4150 Krefeld(DE)**
Erfinder: **Heinz Hans-Detlef, Dr.**
**Breslauer Strasse 31**
**D-4150 Krefeld 11(DE)**
Erfinder: **Traenckner, Hans-Jürgen, Dr.**
**Wedelstrasse 46**
**D-4150 Krefeld(DE)**

(54) Hochmolekulare Polyarylensulfide und Verfahren zu ihrer Herstellung.

(57) Hochmolekulare Polyarylensulfide (PAS) erhalten
durch Aufschmelzen von bekannten Polyarylen sulfiden mit Salzen von polyfunktionellen Sulfonsäuren.

EP 0 339 392 A1

## Hochmolekulare Polyarylensulfide und Verfahren zu ihrer Herstellung

Die Erfindung betrifft hochmolekulare Polyarylensulfide (PAS) und ein Verfahren zu ihrer Herstellung.

Polyarylensulfide sind inerte, hochtemperaturbeständige Thermoplaste, die zudem einen hohen Füllgrad mit Glasfasern und/oder anderen organischen Füllstoffen erlauben. Der Einsatz dieser Polymeren, insbesondere des Polyparaphenylensulfids (PPS), nimmt vor allem in Bereichen zu, die bislang Duroplasten vorbehalten waren.

PPS hat jedoch eine nicht immer ganz befriedigende Zähigkeit, die bei steigender Schmelzviskosität zunehmen kann. Für manche Anwendungen kann eine schnelle Kristallisation von PAS unerwünscht sein, z.B. bei der Herstellung von Folien. Auch die Neigung zur schnellen Kristallisation ist bei PPS-Typen mit hoher Schmelzviskosität geringer.

Methoden zur Herstellung höhermolekularer, verzweigter Polyarylensulfide sind bekannt, z.B. ein Curing mit Luft, Schwefel (z.B. US-PS 3 524 835, 3 793 256, EP-OS 53 385, 64 300, 91 088, US-PS 3 699 087).

Nachteilig bei der Verwendung gasförmiger Curingmittel ist deren schlechte Dosierbarkeit. Eine Nachvernetzung am fertigen Formteil ist kaum möglich.

Bei einer Nachbehandlung mit Schwefel kann dieser z.B. als Schwefelwasserstoff entweichen (z.B. Polym. Degradation and Stability 11, 55 (1985)).

Durch Verwendung von Disulfonsäuren zur nachträglichen Schmelzviskositätserhöhung von PAS können diese Nachteile umgangen werden z.B. (US-PS 3 839 301). Jedoch kann der Zusatz von Säuren eine unkontrollierbar schnelle Erhöhung der Schmelzviskosität bei der Nachbehandlung bewirken.

Es wurde nun gefunden, daß spezielle ausgewählte Salze von Polysulfonsäuren bei Einarbeitung in die PAS-Schmelze, vorzugsweise PPS-Schmelze, eine kontrollierbare Erhöhung der Schmelzviskosität bewirken.

Gegenstand der Erfindung sind daher hochmolekulare Polyarylensulfide, vorzugsweise Polyphenylensulfide, erhalten durch Aufschmelzen von bekannten Polyarylensulfiden der Formel I

$\{Ar\text{-}S\}_n$  (I),

in welcher

Ar für einen $C_6$ bis $C_{24}$-Arylen, para- und /oder meta-Phenylen-, Naphthylen-, 4,4'-Biphenylrest, bevorzugt para-Phenylenrest steht und

n für eine beliebige natürliche Zahl steht, vorzugsweise für eine Zahl 10 bis 5.000, mit Salzen von polyfunktionellen, vorzugsweise difunktionellen Sulfonsäuren der Formeln II und/oder III

$Ar^1(\text{-}SO_3^{\ominus})_x$ $[M^+]_x$ bzw. $[M^{2+}]_{x/2}$  (II),

$HO_3S\text{-}Ar^1(\text{-}SO_3^{\ominus})_y$ $[M^+]_y$ bzw. $[M^{2+}]_{y/2}$  (III),

in welchen

$Ar^1$ für $C_6$-$C_{24}$-Arylen, bevorzugt meta-Phenylen, Biphenylen wie 4,4'-Biphenylen, einen di-, tri- oder tetravalenten Naphthalinrest, einen di-, tri- oder tetravalenten Pyrenrest steht,

M für ein ein- oder zweiwertiges Metallkation, bevorzugt Ammonium-, Natrium-, Kalium-, Magnesium-oder Calciumion steht,

x für eine ganze Zahl größer 1, bevorzugt 2, 3 4 und

y für eine ganze Zahl größer Null, vorzugsweise 1, 2 oder 3 steht.

Polyarylensulfide und ihre Herstellung sind bekannt und handelsüblich (z.B. US-PS 3 354 129, EP-OS 171 021).

Beispiele für Sulfonsäuresalze im Sinne der Erfindung sind Mono- und Di-Natrium- oder Kaliumsalze von m-Phenylensulfonsäure, 1,6-Naphthalindisulfonsäure, 1,4-Naphthalindisulfonsäure, 2,6-Naphthalindisulfonsäure, 2,7-Naphthalindisulfonsäure, 1,5-Naphthalindisulfonsäure, 1,1'-Biphenyl-4,4'-disulfonsäure, 6-Formyl-1,3-benzoldisulfonsäure und 9H-Carbazol-2,7-disulfonsäure, die Di- oder Tri-Natrium-oder Kaliumsalze von 1,3,6-Naphthalintrisulfonsäure oder die Tri- oder Tetra-Natrium- oder Kaliumsalze von 1,3,5,7-Naphthalintetrasulfonsäure und 1,3,6,8-Pyrentetrasulfonsäure. Sie können einzeln oder als Gemische eingesetzt werden.

Gegenstand der Erfindung ist auch ein Verfahren zur Herstellung der erfindungsgemäß erhaltenen Polyarylensulfide, dadurch gekennzeichnet, daß die Mischung aus Polyarylensulfid der Formel I mit 3-30 Gew.-%, bevorzugt mit 5-20 Gew.-%, der Sulfonsäuresalze der Formeln II und/oder III aufgeschmolzen werden.

Die Nachbehandlungszeit in der Schmelze beträgt 0,5 bis 500 Min., bevorzugt 10 bis 100 Min.

Die Temperatur zur erfindungsgemäßen Nachbehandlung in der Schmelze beträgt 280°C bis 450°C, bevorzugt 300°C bis 360°C.

In einer besonderen Ausführungsform können in fester Phase Formkörper aus den erfindungsgemäß erhaltenen Polyarylensulfiden bei Temperaturen von 150°C bis 270°C thermisch nachbehandelt werden.

Das erfindungsgemäße Verfahren kann unter Intergasen (z.B. Stickstoff oder Argon), gegebenenfalls im Vakuum bis $10^{-5}$ bar oder an der Luft z.B. in üblichen Extrudern oder Knetern ausgeführt werden.

Die erfindungsgmeäßen Polyarylensulfide können z.B. durch Spritzguß oder durch Extrusion zu Formkörpern (z.B. Folien) verarbeitet werden. Sie eignen sich vorzugsweise zur Herstellung von Fasern.

Die erfindungsgemäßen Polyarylensulfide können mit üblichen Füllstoffen, z.B. Quarz, Talcum, Glasfasern, Metall(salzen), Metalloxiden, Pigmenten usw. abgemischt werden.

Beispiel 1

100 g Polyparaphenylensulfid der Schmelzviskosität 44 Pa.s (jeweils bei 306° C und 1000 s$^{-1}$) werden mit 10 g 6-Formyl-1,3-benzoldisulfonsäure, Mononatriumsalz gemischt und unter Stickstoff 60 Min. bei 320° C gerührt. Die Schmelzviskosität des resultierenden Polyarylensulfids beträgt 320 Pa.s

Beispiel 2

Man verfährt wie in Beispiel 1 beschrieben. Als Sulfonsäuresalz werden 10 g 1,6-Naphthalindisulfonsäure, Mononatriumsalz eingesetzt. Die Schmelzviskosität des resultierenden Polyarylensulfids beträgt 250 Pa.s.

Beispiel 3

Man verfährt wie in Beispiel 1 beschrieben. Als Sulfonsäuresalz werden 20 g 1,6-Naphthalindisulfonsäure, Mononatriumsalz eingesetzt. Die Schmelzviskosität des resultierenden Polyarylensulfids beträgt 13.000 Pa.s.

Beispiel 4

Man verfährt wie in Beispiel 1 beschrieben. Als Sulfonsäuresalz werden 20 g 1,4-Naphthalindisulfonsäure, Dinatriumsalz eingesetzt. Die Schmelzviskosität des resultierenden Polyarylensulfids beträgt 70 Pa.s.

Beispiel 5

100 g Polyparaphenylensulfid der Schmelzviskosität 5 Pa.s werden mit 10 g 6-Formyl-1,3-benzoldisulfonsäure, Mononatriumsalz gemischt und unter Stickstoff 60 min. bei 320° C gerührt. Die Schmelzviskosität des resultierenden Polyarylensulfids beträgt 43 Pa.s.

Ansprüche

1. Hochmolekulare Polyarylensulfide, vorzugsweise Polyphenylensulfide, erhalten durch Aufschmelzen von bekannten Polyarylensulfiden der Formel I

$$\{Ar-S\}_{\overline{n}} \quad (I),$$

in welcher

Ar für einen $C_6$ bis $C_{24}$-Arylen, para- und /oder meta-Phenylen-, Naphthylen-, 4,4'-Biphenylenrest, bevorzugt para-Phenylenrest steht und

n für eine beliebige natürliche Zahl,

mit Salzen von polyfunktionellen, vorzugsweise difunktionellen Sulfonsäuren der Formeln II und/oder III

$$Ar^1-(-SO_3-{}^{\ominus})_x\ [M^+]_x\ bzw.\ [M^{2+}]_{x/2} \quad (II),$$
$$HO_3S-Ar^1-(-SO_3{}^{\ominus})_y\ [M^+]_y\ bzw.\ [M^{2+}]_{y/2} \quad (III),$$

in welchen

Ar$^1$ für $C_6$-$C_{24}$-Arylen, bevorzugt meta-Phenylen, Biphenylen wie 4,4'-Biphenylen, einen di-, tri- oder tetravalenten Naphthalinrest, einen di-, tri- oder tetravalenten Pyrenrest steht,

M für ein ein- oder zweiwertiges Metallkation, bevorzugt Ammonium-, Natrium-, Kalium-, Magnesium-oder Calciumion steht,

x für eine ganze Zahl größer 1, bevorzugt 2, 3, 4 und

y für eine ganze Zahl größer Null, vorzugsweise 1, 2 oder 3 steht.

2. Verfahren zur Herstellung der Polyarylensulfide nach Anspruch 1, dadurch gekennzeichnet, daß die Mischung aus Polyarylensulfid der Formel I mit 3-30 Gew.-%, bevorzugt mit 5-20 Gew.-%, der Sulfonsäuresalze der Formeln II und/oder III bei 280° C bis 450° C, vorzugsweise 300° C bis 360° C aufgeschmolzen werden.

3. Verwendung von Polyarylensulfiden nach Anspruch 1 zur Herstellung von geformten Körpern.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 218 946 (BAYER AG) <br> * Ansprüche; Spalte 6, Zeilen 41-45 * <br> --- | 1-3 | C 08 K 5/42 <br> C 08 L 81/02 <br> C 08 G 75/02 |
| D,A | US-A-3 839 301 (L. E. SCOGGINS) <br> * Ansprüche; Spalte 5, Zeilen 19-38 * <br> --- | 1-3 | |
| A | DE-A-3 615 030 (TOYO BOSEKI) <br> * Ansprüche; Seite 20, Zeile 16 - Seite 21, Zeile 9 * <br> --- | 1,3 | |
| A | EP-A-0 103 279 (PHILLIPS PETROLEUM COMPANY) <br> * Ansprüche * <br> ----- | 1-3 | |

**RECHERCHIERTE SACHGEBIETE (Int. Cl.4)**

C 08 K 5/00
C 08 L 81/00
C 08 G 75/00

Der vorliegende Recherchenbericht wurde für alle Patentansprüche erstellt

| Recherchenort | Abschlußdatum der Recherche | Prüfer |
|---|---|---|
| BERLIN | 19-07-1989 | BOEKER R.B. |